Europäisches Patentamt

European Patent Office

Office européen des brevets

(11) Publication number: **0 242 944**
**B1**

(12) EUROPEAN PATENT SPECIFICATION

(45) Date of publication of patent specification: **23.01.91**

(21) Application number: **87301153.0**

(22) Date of filing: **10.02.87**

(51) Int. Cl.⁵: **B 65 B 25/06, A 22 C 11/02**

(54) **Automatic meat stuffing apparatus.**

(30) Priority: **11.04.86 JP 84837/86**

(43) Date of publication of application:
**28.10.87 Bulletin 87/44**

(45) Publication of the grant of the patent:
**23.01.91 Bulletin 91/04**

(84) Designated Contracting States:
**DE ES FR GB IT SE**

(56) References cited:
**EP-A-0 110 343**
**EP-A-0 111 960**
**AU-B- 84 135**
**DE-A-2 411 020**
**DE-A-3 106 074**
**DE-A-3 214 018**
**FR-A-2 162 806**
**US-A-4 534 084**
**US-A-4 558 486**

(73) Proprietor: **FUTABA DENKI KOGYO KABUSHIKI
KAISHA
9-54, Tagawa 3-chome
Yodogawaku Osaka (JP)**

(72) Inventor: **Kawai, Kazuyoshi
c/o Futaba Denki Kogyo K.K. 9-54 Tagawa
3-Chome
Yodagawaku Osaka (JP)**

(74) Representative: **Topps, Ronald et al
D. YOUNG & CO 10 Staple Inn
London WC1V 7RD (GB)**

Courier Press, Leamington Spa, England.

## Description

The present invention relates to apparatus for automatically inserting meat into a tubular, net-like casing, such meat preferably, but not essentially, comprising raw beef, chicken, pork or any other edible meat in the form of an extruded piece.

To roast and season a piece of meat the common practice is to bind it with cotton string in such a manner as to produce a mesh on the surface thereof. This requires intensive labour. In order to reduce labour a proposal has been made for using a tubular net casing instead of the string, as disclosed in Japanese Utility Model publication (examined) No. 58 (1983)—33762. This prior publication teaches that the tubular casing of net is fixed by hand to the mouthpiece of a filling nozzle, and then the meat is extruded into the casing. Nevertheless this method requires labour in fixing the casing to the filling nozzle. In addition, the network casing is too supple and uncontrollable to handle, which requires skill and experience.

According to the present invention there is provided an automatic meat stuffing apparatus comprising:

a meat extruder including a filling nozzle;

a casing supply unit including a carrier for carrying a tubular network casing from a reel to a point adjacent to the filling nozzle;

a net expander for expanding an open end of the casing through which meat is stuffed into the casing, the net expander being reciprocally movable along the filling nozzle, and including pawls for holding the casing, said pawls being retractable at a point adjacent to the open end of the filling nozzle, and openable so as to expand the open end of the casing and allow meat to be stuffed therein through the filling nozzle; and

a cutting and clipping device for cutting the casing to a desired length and closing it with a clip, the cutting and clipping device being located adjacent to the open end of the filling nozzle.

An embodiment of the invention will now be described, by way of an example, with reference to the accompanying drawings, in which:

Figure 1 is a plan view of an apparatus according to the present invention;

Figure 2 is a front view of the apparatus of Figure 1;

Figure 3 is a schematic plan view showing the process of expanding the casing;

Figure 4 is a schematic plan showing the process of fixing the opened casing to the filling nozzle;

Figure 5 is a schematic plan view showing the process of stuffing meat into the casing through the nozzle;

Figure 6 is a schematic plan view showing the process of stuffing meat into the casing through the nozzle;

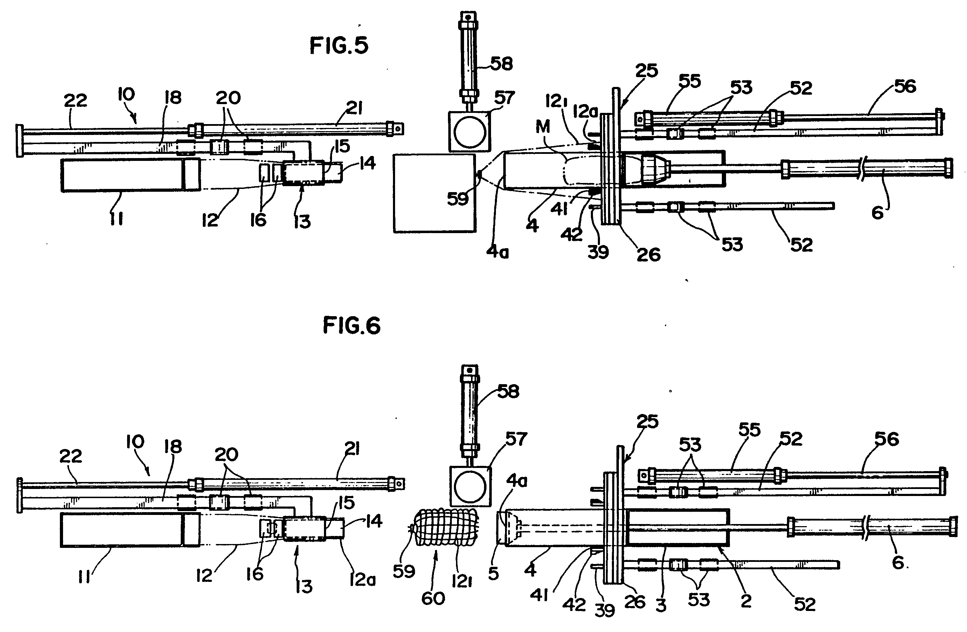

Figure 6 is a schematic plan view showing the completion of the meat stuffing process;

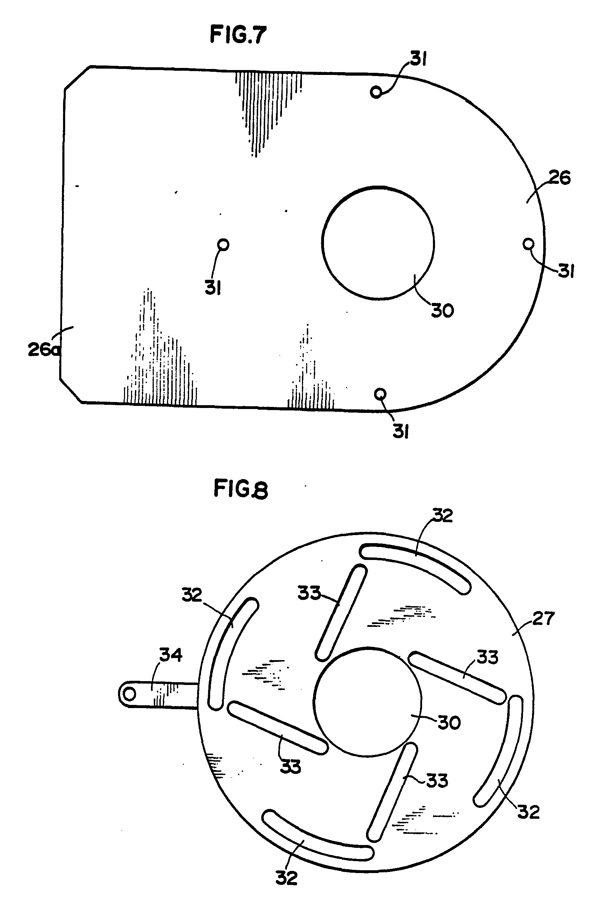

Figure 7 is a front view showing a fixing disc;

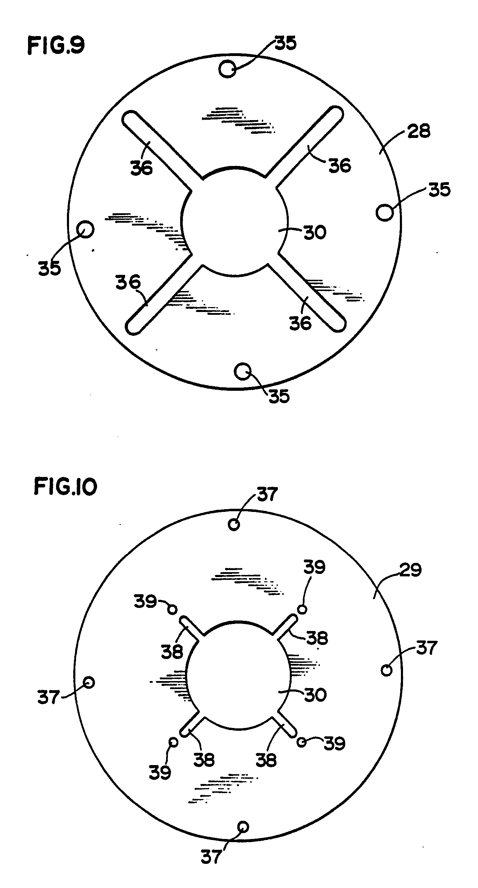

Figure 8 is a front view showing a rotary disc;

Figure 9 is a front view showing a guide disc;

Figure 10 is a front view showing a cover disc;

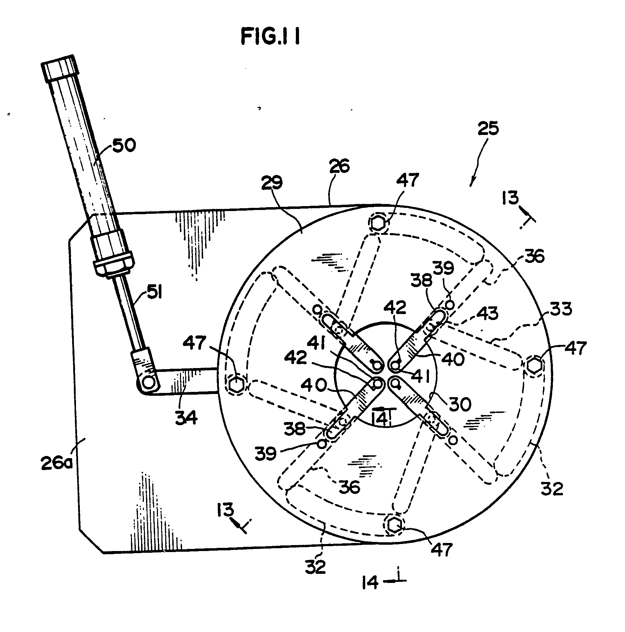

Figure 11 is a front view showing the pawls of the net expander being closed;

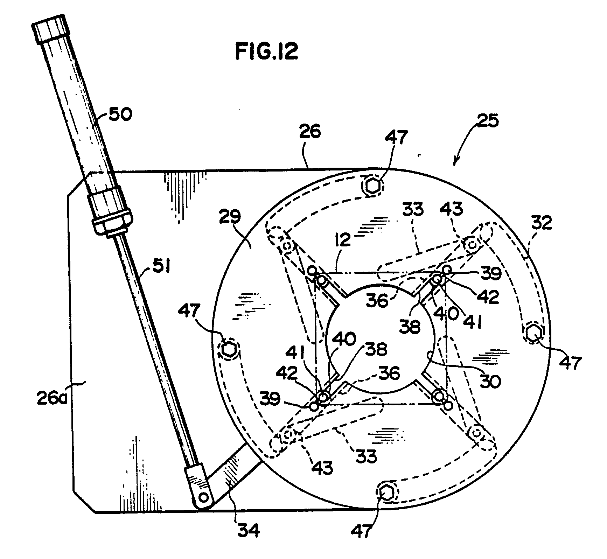

Figure 12 is a front view showing the pawls of the net expander being opened.

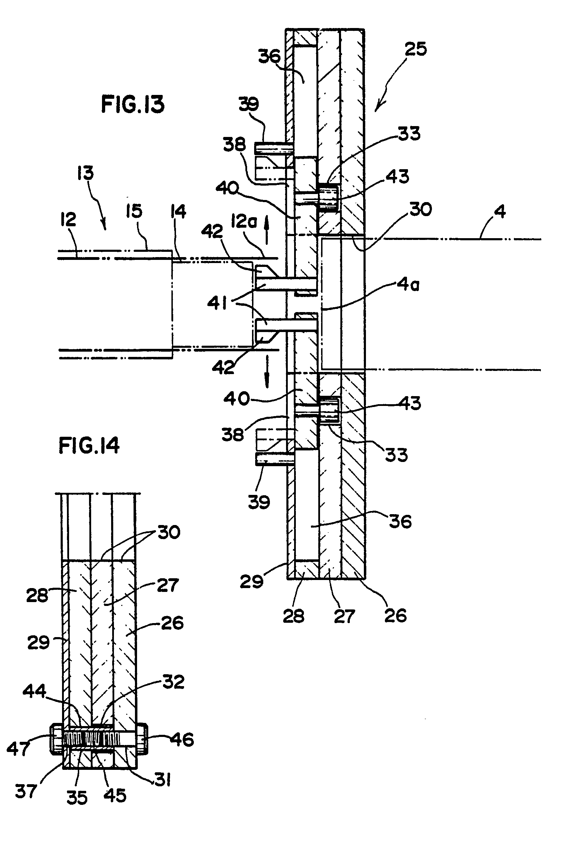

Figure 13 is a cross-sectional view taken along the line 13—13 in Figure 11; and

Figure 14 is a cross-sectional view taken along the line 14—14 in Figure 11.

The apparatus is provided with a frame 1 on which a meat extruder 2 is mounted, the meat stuffing device 2 including an open-topped hopper 3, and a filling nozzle 4. The reference numeral 5 denotes a pusher reciprocally movable between the bottom of the hopper 3 and an open end 4a of the filling nozzle 4, whereby the meat (M) introduced into the hopper 3 is extruded through the open end 4a of the nozzle. The pusher 5 is driven by means of a pneumatic piston and cylinder device 6 or by a hydraulic piston and cylinder device.

A net is supplied by a net supply device 10, which includes a reel 11 and a carrier 13 for pulling a tubular network casing 12 from the roll of casing material wound around the reel 11. The carrier 13 runs between the reel 11 and the open end 4a of the filling nozzle 4. The casing 12 is a fabric made by knitting warps and wefts into a long, continuous tubular form in such a manner as to allow the warps end wefts to expand in the longitudinal and circumferential directions, respectively. Preferably the warps are made of cotton string and the wefts are made of cotton strings containing a core of rubber string, which offers an advantage that the casing 12 is contractive because of the elasticity of the wefts.

The carrier 13 is the same as that disclosed in US—A—3,919,739 and Japanese Patent Publication (examined) No. 52(1977)—27715. The carrier 13 includes an inner cylinder 14 and an outer cylinder 15, wherein the inner cylinder 14 is longer that the outer cylinder 15. Between the two cylinders 14 end 15 the network casing 12 is inserted by the help of guide rollers 16 arranged at the tail portion of the carrier 13, and extended up to the terminating front end of the inner cylinder 14. In this state the casing 12 is held by a retainer 17 provided on the outer cylinder 15. In this way the casing 12 is joined to the carrier 13, which is caused to move until an opened end 12a of the casing 12 comes close to the open end 4a of the filling nozzle 4.

The carrier 13 is operated by the following mechanism:

The carrier 13 is fixed to an end portion of a long guide rod 18 through the outer cylinder 15. The rod 18 has a rectangular cross-section, and is supported on a bracket 19 through three rollers 20, the bracket 19 being fixed to the frame 1 in parallel with the axis of the filling nozzle 4 in such a manner that the rod 18 is slidable in the longitudinal direction. The rear end of the rod 18 is fixed to a piston rod 22 of a pneumatic piston and cylinder device 21. When the pneumatic piston and cylinder device 21 is operated the rod 18 is caused to slide forwardly, thereby enabling the carrier 13 to move along the axis of the filling nozzle 4.

There is provided a net expander 25 designed to cause the open end of the tubular network casing 12 to be placed on the end of the nozzle 4. The net expander 25 includes a fixing disc 26, a rotary disc 27, a guide disc 28 and a cover disc 29, all of which are overlaid one on another as best shown in Figure 13, and is located near the open end 4a of the filling nozzle 4.

As shown in Figures 7 to 10 each disc' 26, 27, 28 and 29 has an aperture 30 in its centre, the aperture 30 having a diameter larger than the outside diameter of the filling nozzle 4. The fixing disc 26 has an extended portion 26a as shown in Figure 7. The function and operation of the discs 26 to 29 will be described in greater detail:

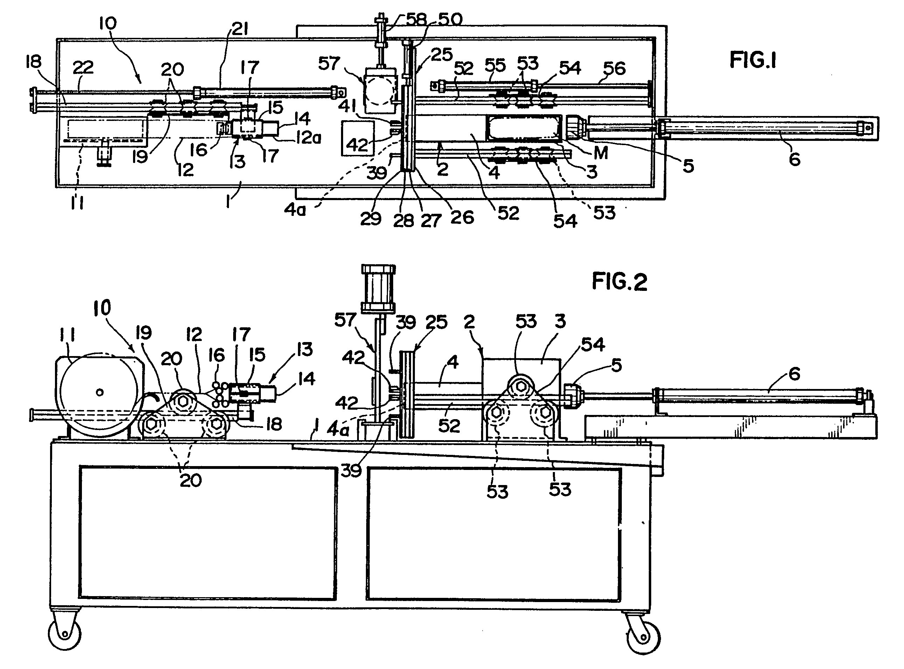

The discs 27 to 29 are mounted on the fixing disc 26, and for this purpose four holes 31 therein are arranged concentrically of the aperture 30 of the disc 26, preferably at quarterly angular displacements. The extended portion 26a of the fixing disc 26 is provided with a pneumatic piston and cylinder device 50 which operates the rotary disc 27. The fixing disc 26 is additionally provided with two guide bars 52 in parallel with the axis of the filling nozzle 4 as best shown in Figure 1.

As shown in Figure 8 the rotary disc 27 is provided with first four guide slots 32 each of which extend along the circumference of a circle of the same diameter as that of a circle passing through the four holes 32 in the fixing disc 26. In addition, second four slots 33 are provided, the second slots each starting from a point adjacent to one end of a first slot 32 and terminating at a point adjacent to the circumference of the aperture 30. The second slots 33 function as cam grooves, and are inclined at a given angle to lines extending in the radial direction of the disc 27. The reference numeral 34 denotes a lever projecting radially from the disc 27 for connection to the piston rod 51 of the pneumatic piston and cylinder device 50.

Referring to Figure 9 the guide disc 28 is provided with four holes 35 at positions corresponding to the holes 31 in the disc 26. In addition the disc 28 is provided with guide slots 36 radially extending from the aperture 30, each of the guide slots 36 opening into the aperture 30, and extending toward a point located between adjacent holes 35.

Sliders 40 are slidably received in the guide slots 36. The function and operation of the sliders 40 will be described in detail:

Referring to Figure 10 the cover disc 29 is provided with hole 37 at positions corresponding to the holes 31 and 35 in the discs 26 and 28. In addition four guide slots 38 extend radially from the aperture 30, the guide slots 38 extending toward a point between adjacent holes 37 at positions corresponding to the guide slots 36 in the disc 28, and being shorter and narrower than the guide slots 36. The guide slots 38 are open to the aperture 30. A pawl 42 provided on each slider 40 is movably received in the guide slots 38. The reference numeral 39 denotes stops which are situated at a point adjacent to the closed end of each guide slot 38, so as to hold the open end 12a of the casing 12 in cooperation with the pawl 42.

Referring to Figures 11 and 13 the sliders 40 are slidably fitted into the respective guide slots 36 of the guide disc 28, and provided with an engaging pin 41, which projects in parallel with the axis of the filling nozzle 4. In addition each slider 40 is provided with a cam follower 43 rotatably received in the cam grooves 33 in the rotary disc 27.

The four discs 26 to 29 are overlaid one after another so as to constitute a unit as best shown in Figure 14; first, bushes 44 are inserted in the guide slots 32 in the rotary disc 27, and then the bushes are fixed in the holes 35 in the guide disc 28. Screws 46 are inserted in the holes 31 in the fixing disc 26, and screws 47 are inserted in the holes 37 in the cover disc 29. Both screws 46 and 47 are engaged with screw-threads 45 in the bushes 44. In this way the guide disc 28 and the cover disc 29 are fastened to the fixing disc 26, with a space left between the guide slots and the bushes 44 for allowing the rotary disc 27 to rotate.

When the cam followers 43 are situated at the innermost end of the cam grooves 33 as shown in Figure 11, the sliders 40 project until their top ends gather around the axis of the filling nozzle 4, thereby enabling their pawls 42 to come together. When the cam followers 43 come to the outermost end of the cam grooves 33 by operating the pneumatic piston and cylinder device 50 to rotate the sliders 40, the pawls 42 are caused to move outward in a radial direction as shown in Figure 12.

The net expander 25 is opened and closed in the above-mentioned manner; when it is opened as shown in Figure 12 the top portion of the filling nozzle is accommodated in the apertures 30. At this stage the guide rods 52 are ready to move axially with the filling nozzle 4 by means of the rollers 53. The rollers 53 are rotatively supported on the framework 1 through the brackets 54, wherein the two rollers 53 carry the guide rods 52 from below and the other roller 53 in the middle bears on them from above as shown in Figure 2. One of the guide rods 52 is longer than the other, and the longer rod is connected to a piston rod 56 of a pneumatic piston and cylinder device 55, whereby the net expander 25 is reciprocally moved along the axis of the filling nozzle 4.

There is provided a cutting and clipping device 57 situated adjacent to the top end portion of the filling nozzle 4, which device 57 is operated by means of a pneumatic piston and cylinder 58 and moved transversely; that is, in a direction perpendicular to the axis of the filling nozzle 4. The cutting and clipping device 57 is know in the art, and a description of it will be omitted for simplicity.

The apparatus described above will be operated in the following manner:

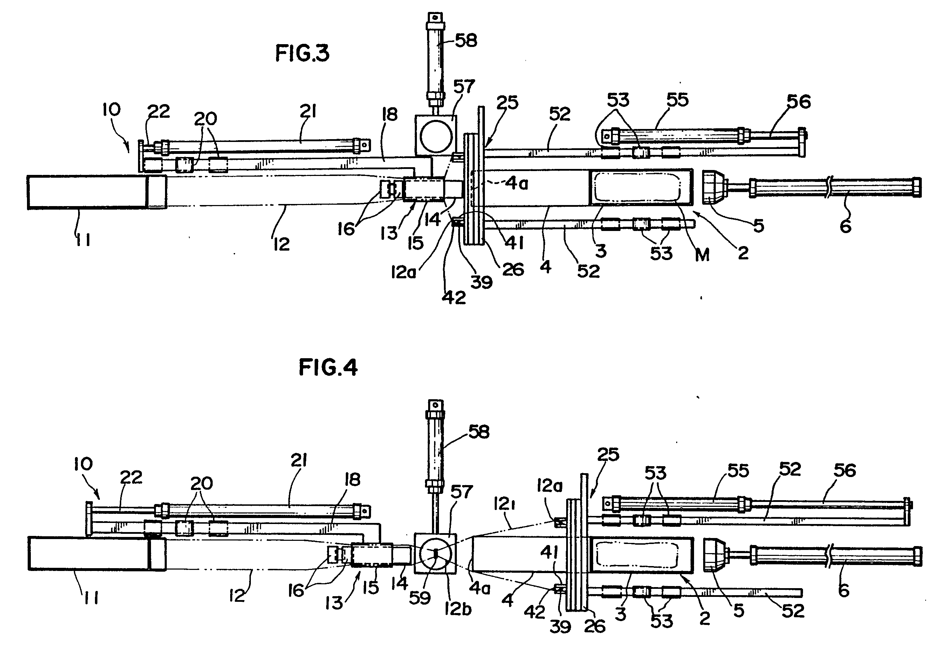

Figures 1 and 2 show the state from which the apparatus starts its operation. The carrier 13 is situated at the starting position and holding the forward end portion of the casing 12. The net expander 25 is situated at a point near the open end 4a of the filling nozzle 4 with the pawls 42 being closed. The pneumatic piston and cylinder device 21 is operated to move the carrier 13 toward the filling nozzle 4; while doing so, the casing 12 is pulled out from the reel 11 and its open end portion 12a extends over the four pawls 42 as shown in Figure 13. At this stage the casing 12 is released from the carrier 13. Then the pneumatic piston and cylinder device 50 is operated to rotate the rotary disc 27 from the position shown in Figure 11 to that shown in Figure 12, thereby causing the pawls 42 to open with the end portion 12a of the casing 12 placed thereon. The expanded end of the casing 12 is maintained by the pawls 42 and the stop means 39, which prevents the casing 12 from separating from the carrier during operation. (Figures 3, 4 and 12).

Then the pneumatic piston and cylinder device 55 is operated to move the net expander 25 towards the hopper 3. In accordance with the movement of the net expander 25 the expanded end of the casing 12 extends over the filling nozzle 4; then the carrier 13 is returned until the top end of the inner cylinder 14 comes to a point which the casing 12 is cut.

Then the pneumatic piston and cylinder device is operated to move the cutting and clipping device 57 to a point between the open end 4a of the filling nozzle 4 and the carrier 13. The device 57 cuts the casing 12 at a point near the open end 4a of the filling nozzle, and closes the cut end 12b thereof with a clip 59. In this way a unit casing $12_1$ is formed with one end 12a being open and the other end being closed by the clip 59 as best shown in Figure 5.

The carrier 13 is returned to its starting position shown in Figures 1 and 2, with holding the subsequent casing, and waits for the next operation.

Referring to Figure 5 the pusher 5 is operated by the pneumatic piston and cylinder device 6 and extrudes the meat (M) into the unit casing $12_1$ from the hopper 3 through the open end 4a of the filling nozzle 4. At (this stage the pawls 42 are slightly moved to their closing position, and are disengaged from their cooperative state with the stops 39, thereby making the open end 12a of the casing $12_1$ releasable from the pawls 42. The meat (M) is continuously extruded in the unit casing $12_1$ until it is filled with the meat and becomes separated from the filling nozzle 4 as shown in Figure 6. Once the stuffed casing 60 has been separated from the filling nozzle 4 the strings of the net spontaneously contract, thereby enabling the open end 12a of the unit casing $12_1$ to close into contact with the meat without using a clip. In this way a finished sausage is produced. The same procedure is then repeated.

As is evident from the foregoing description a great advantage of the present invention is that the use of labour is considerably saved in stuffing meat into uncontrollable network casings, thereby enhancing the working efficiency and reducing the labour cost.

**Claims**

1. An automatic meat stuffing apparatus comprising:

a meat extruder (2) including a filling nozzle (4);

a casing supply unit (10) including a carrier (13) for carrying a tubular network casing (12) from a reel (11) to a point adjacent to the filling nozzle (4);

a net expander (25) for expanding en open end (12a) of the casing (12) through which meat is stuffed into the casing, the net expender (25) being reciprocally movable along the filling nozzle (4), and including pawls (42) for holding the casing (12), said pawls (42) being retractable at a point adjacent to the open end of the filling nozzle (4), and openable so as to expand the open end (12a) of the casing (12) to allow meat to be stuffed therein through the filling nozzle (4); and

a cutting and clipping device (57) for cutting the casing (12) to a desired length and closing it with a clip (59), the cutting and clipping device (57) being located adjacent to the open end of the filling nozzle (4).

2. An automatic meat stuffing apparatus as claimed in claim 1, in which the cutting and clipping device (57) is movable transversely with respect to the axis of the filling nozzle (4).

**Patentansprüche**

1. Automatische Fleischfüllvorrichtung mit:

einer Fleischpresse (2) einschließlich einer Fülldüse (4),

einer Zuführeinheit (10) für eine Hülle einschließlich eines Trägers (13) für das Überführen einer rohrförmigen Netzwerkhülle (12) von einer Rolle (11) zu einer Stelle in der Nähe der Fülldüse (4),

einem Netzstecker (25) zum Dehnen eines offenen Endes (12a) de Hülle (12), durch welches das Fleisch bzw. Fleischbrät in die Hülle hineingestopft wird, wobei der Netzstrecker (25) entlang der Fülldüse (4) hin und herbewegbar ist, und mit Klinken (42) zum Halten der Hülle (12), wobei die Klinken (42) an einer Stelle in der Nähe des offenen Endes der Fülldüse (4) zurückziehbar sind und zu öffnen sind, so daß sie das offene Ende (12a) der Hülle (12) ausdehnen, um zu ermöglichen, daß Fleischbrät durch die Fülldüse (4) da hineingestopft wird, und

einer Schneid- und Klemmeinrichtung (57) zum Abtrennen der Hülle (12) auf eine gewünschte Lange und zum Verschließen derselben mit einer Klammer (29), wobei die Schneid- und Klemmeinrichtung (57) in der Nähe des offenen Endes der Fülldüse (4) angeordnet ist.

2. Automatische Fleischstopfvorrichtung nach Anspruch 1, wobei die Schneid- und Klemmeinrichtung (57) in Querrichtung bezüglich der Achse der Fülldüse (4) bewegbar ist.

## Revendications

1. Appareil de bourrage automatique de viande comprenant:

une extrudeuse de viande (2) comprenant une buse de remplissage (4);

une unité de distribution de gaine (10) comprenant un support (13) pour transporter une gaine en filet tubulaire (12) d'une bobine (11) jusqu'à un point adjacent à la buse de remplissage (4);

un dispositif d'expansion (25) pour élargir une extrémité ouverte (12a) de la gaine (12) par laquelle la viande est bourrée dans la gaine, le dispositif d'expansion (25) pouvant aller et venir le long de la buse de remplissage (4), et comprenant des cliquets (42) pour tenir la gaine, lesdits cliquets (42) pouvant être rétractés à un point adjacent à l'extrémité ouverte de la buse de remplissage (4), et être ouverts pour élargir l'extrémité ouverte (12a) de la gaine (12) pour permettre à la viande d'être bourrée à l'intérieur par ls buse de remplissage (4); et

un dispositif de découpe et de serrage (57) pour couper la gaine (12) à une longueur souhaitée et la fermer avec une attache (59), le dispositif de découpe et de serrage (57) étant situé adjacent à l'extrémité ouverte de la buse de remplissage (4).

2. Appareil de bourrage automatique de viande selon la revendication 1, dans lequel le dispositif de découpe et de serrage (57) est mobile transversalement à l'axe de la buse de remplissage (4).

FIG.1

FIG.2

FIG.3

FIG.4

FIG.5

FIG.6

## FIG.7

## FIG.8

**FIG.9**

**FIG.10**

## FIG.11

# FIG.12

**FIG.13**

**FIG.14**